# EUROPÄISCHE PATENTSCHRIFT

(11) **EP 1 258 711 B1**
(45) Veröffentlichungstag und Bekanntmachung des Hinweises auf die Patenterteilung: **15.06.2016**
(21) Anmeldenummer: 02450080.3
(22) Anmeldetag: 10.04.2002
(51) Int. Cl.: G01D 5/347, G01D 5/36, G01D 5/245

(54) **Drehwinkelaufnehmer, Markenscheibe sowie Verfahren zur Ermittlung eines Referenzwertes"**
Angular position sensor, code disc and procedure to determine a reference value
Capteur de positions angulaires, disque codeur et procédé pour déterminer une valeur de référence

(30) Priorität: 17.05.2001 AT 2001394 U
(43) Veröffentlichungstag der Anmeldung: 20.11.2002
(73) Patentinhaber: AVL List GmbH, 8020 Graz (AT)
(72) Erfinder: Kirschbaum, Paul, 8054 Seiersberg (AT); Leitmeier, Klaus, 8010 Graz (AT)
(74) Vertreter: Patentanwälte Pinter & Weiss OG

(56) Entgegenhaltungen:
- DE-A1- 19 646 391
- US-A- 4 421 980
- US-A- 4 746 862
- US-A- 4 866 269

## Beschreibung

Die Erfindung betrifft eine Markenscheibe für einen Drehwinkelaufnehmer für rotierende Bauteile, insbesonders rotierende Wellen, mit einer Vielzahl von vorzugsweise radial zur Rotationsachse ausgerichteten und vorzugsweise in Form eines konzentrisch zur Rotationsachse angeordneten Kranzes vorgesehenen Winkelmarken in lediglich einer Spur und mit zumindest einer Referenzmarke, welche durch eine in ihren modulierenden Eigenschaften abweichende Winkelmarke gebildet ist, wobei die zumindest eine Referenzmarke eine gegenüber den Winkelmarken großere Fläche aufweist, wozu die zumindest eine Referenzmarke gegenüber den Winkelmarken, in radialer Richtung verlängert ist, weiters einen Winkelaufnehmer für rotierende Bauteile, insbeson-ders rotierende Wellen, umfassend eine mit dem rotierenden Bauteil koppelbare Markenscheibe mit einer Vielzahl von vorzugsweise radial zur Rotationsachse ausgerichteten und vorzugsweise in Form eines konzentrisch zur Rotationsachse angeordneten Kranzes vorgesehenen Winkelmarken in lediglich einer Spur und mit zumindest einer Referenzmarke, welche durch eine in ihren modulierenden Eigenschaften abweichende Winkelmarke gebildet ist, wobei die zumindest eine Referenzmarke eine gegenüber den Winkelmarken größere Fläche aufweist, wozu die zumindest eine Referenzmarke gegenüber den Winkelmarken in radialer Richtung verlängert ist, mit weiters einer feststehenden Abtasteinheit für die Winkelmarken, umfassend zumindest einen Sender elektromagnetischer Strahlung und zumindest einen Empfänger für die von der Markenscheibe modulierte Strahlung, sowie Verbindungsmitteln zu einer Auswerteinheit, sowie ein Verfahren zur Ermittlung eines Referenzwertes aus einem analogen Signal, welches durch Modulierung eines Sendersignales durch eine Vielzahl von Winkelmarken und zumindest eine in der Qualität der Modulierung gegenüber den Winkelmarken abweichende Referenzmarke erhalten wird, wobei das modulierte Signal durch einen Empfänger aufgenommen und einer Auswerteinheit zugeführt und allenfalls weiter digitalisiert wird.

Die Bestimmung und Anzeige der aktuellen Winkelposition eines rotierenden Teiles in Echtzeit, d.h. mit vernachlässigbar geringer Signalverzögerung, ist auf vielen Gebieten der Technik erforderlich. Beispielsweise sind sowohl in Forschung und Entwicklung, als auch in der Serienanwendung von Verbrennungskraftmaschinen Winkelaufnehmer für die aktuelle Drehposition der Kurbelwelle oder der Nockenwelle(n) im Einsatz. Dabei sind unterschiedliche Meßprinzipien verwirklicht.

Ein besonders vorteilhaftes System verwendet eine Winkelmarkenscheibe, die mit dem rotierenden Teil mechanisch verbunden werden kann, und eine sensorische Vorrichtung zum Abtasten der auf der Scheibe befindlichen, typischerweise radial zur Drehachse und vorzugsweise konzentrisch um diese Achse angeordneten Winkelmarken. Dabei sind zwei Meßkanäle vorgesehen, mit welchen zwei Zeilen von Winkelmarken unabhängig voneinander mit Hilfe von zwei Sensorsystemen abgetastet werden, nämlich eine Inkrementalspur mit einer Vielzahl von gleichen, äquidistanten Winkelmarken, beispielsweise 720 Winkelmarken pro Umdrehung, und eine Referenzspur mit beispielsweise einer Referenzmarke pro Umdrehung. Die Drehwinkelposition der Scheibe - und damit auch des rotierenden Teils - kann aus den Winkelmarkensignalen der Inkrementalspur und unter Bezugnahme auf die Referenzmarke - welche beispielsweise die Position des oberen Totpunktes eines der Zylinder einer Kolbenmaschine kennzeichnen kann - bestimmt werden. Die sensorische Vorrichtung ist vorzugsweise ein elektro-optisches System, das im Durchlicht oder im Reflexionslicht die Winkelmarken abtastet und nach allfälliger Digitalisierung einer Anzeige- bzw. Auswerteeinheit zuführt. Dabei sind die Form der Winkelmarken and die Empfindlichkeitscharakteristik der Sensoren aufeinander abgestimmt, vorzugsweise auch die Abstrahlcharakteristik des Senders, wobei im Allgemeinen längliche, schlitzartige Sende- und Empfangsfenster auf strichförmige Winkelmarken, beide radial zur Drehachse und im wesentlichen parallel zueinander, ausgerichtet sind. Zur Konditionierung der Sensorsignale ist eine analoge Elektronik mit geringstmöglichem Zeitversatz vorgesehen, wobei aus den verstärkten Analogsignalen der Winkelmarkensensoren mit Hilfe schneller Komparatoren digitale Triggersignale abgeleitet werden, die den Zeitpunkt des Erreichens des jeweiligen zugehörigen Drehwinkels anzeigen. Digitale Signalprozessoren haben sich aufgrund der Rechenzeiten und des damit unvermeidlichen Zeitversatzes bisher nicht bewährt, während speziell das oben erläuterte System in für den Anwender einsichtiger Weise die absolute Winkelpositionsbestimmung eines rotierenden Teils mit hoher Präzision und Winkelauflösung und mit einem vernachlässigbar geringen Zeitversatz zwischen einer bestimmten Position des Teils und der Ausgabe des zugehörigen elektrischen Signals gewährleistet.

Allerdings haben Systeme wie oben erläutert jedoch den Nachteil, dass die zwei - oder im Falle von mehreren Spuren auch mehreren - opto-elektronischen Meßkanäle teuer sind, Platz benötigen und zum Gewicht bzw. der Masse der Meßanordnung nicht unwesentlich beitragen. Sowohl Baugröße als auch Masse sind ausgesprochen störend, insbesonders bei kleinen Motoren mit hohen Drehzahlen, bei denen sich jede zusätzliche (Schwung-)Masse an der Kurbelwelle deutlich bemerkbar macht, oder bei bereits in Fahrzeuge eingebauten Motoren und den dabei beengten Platzverhältnissen bzw. auch in Bezug auf die großen Schwingungsbeschleunigungen, denen die Meßvorrichtung im praktischen Betrieb an Verbrennungsmotoren ausgesetzt ist.

Daher wurden bereits einfache und billige Lösungen vorgeschlagen, die nur einen Meßkanal aufweisen, oftmals einen induktiven Sensor, und bei welchen die Referenzposition durch eine Abweichung von der ansonst äquidistanten Anordnung der Winkelmarken gegeben ist. Beispielsweise werden bei Zahnscheiben zur Kennzeichnung der Referenzposition Zähne ausgelassen. Mithilfe der laufend bestimmten Drehwinkelgeschwindigkeit bzw. aus der erwarteten Zeitdauer des folgenden Drehwinkelintervalls erkennt die Auswerteinheit die fehlenden Zähne und zeigt das Erreichen der Referenzposition an. Durch Extrapolation aus der jeweils vorhergehenden Dauer eines Drehwinkelintervalls können auch die fehlenden Winkelmarkensignale simuliert werden. Dies ist aber mit dem wesentlichen Nachteil der deutlich reduzierten Genauigkeit der fortlaufenden Drehwinkelmessung verbunden, da in der für die Codierung der Referenzposition notwendigen Winkelmarken-Lücke die aktuelle Drehwinkel-Information fehlt, so dass sowohl die Referenzposition als auch die aktuelle Drehwinkelgeschwindigkeit nur näherungsweise angegeben werden können. Überdies bedingen die notwendigen Berechnungen einen nicht unwesentlichen Zeitversatz. Daher ist ein derartiges System für Forschung und Entwicklung, für Analyse von Drehungleichförmigkeit und von Drehschwingungen von beispielsweise Verbrennungskraftmaschinen oder auch die präzise kurbelwinkelsynchrone Meßdatenerfassung zu ungenau bzw. nur bedingt brauchbar.

Die US-A-4 866 269 beschreibt eine Vorrichtung, bei der Winkelmarken mit unterschiedlichen Modulationseigenschaften vorgesehen sind, um beispielsweise Marken für Positionsinformationen bezüglich des Drehwinkels und eine Referenzmarke zu definieren. Zu diesem Zweck weisen diese Marken bei jeweils identischer Fläche und Form unterschiedliche Reflexions- bzw. Transmissionseigenschaften auf. Die US-A-4 421 980 hingegen offenbart eine Referenzmarke, die durch eine Flächenvergrößerung gegenüber den normalen Winkelmarken gebildet ist. Die Flächenvergrößerung wird dabei durch Verbreiterung der Referenzmarke in Umfangsrichtung der Markenscheibe erreicht. Bei der US-A-4 746 862 wiederum wird eine Referenzposition dadurch definiert, dass eine Winkelmarke entfernt wird, oder dadurch, dass eine Winkelmarke unterteilt wird.

Anstelle einer Flächenvergrößerung der Referenzmarke durch Verlängerung in Umfangsrichtung der Markenscheibe mit der daraus resultierenden verminderten Auflösungsgenauigkeit, ist hingegen sowohl in der japanischen Gebrauchsmusteranmeldung Hei-2-118825 als auch in der japanischen Gebrauchsmusteranmeldung Hei-1-75818 jeweils eine Markenscheibe für eine optische Signalverlaufsvorrichtung beschrieben, bei welcher ein Index- bzw. Referenzpuls produziert wird, und wobei die Referenzmarke zur Flächenvergrößerung gegenüber den Winkelmarken in radialer Richtung der Markenscheibe verlängert ist. Diese Referenzmarke weist durchgehend eine konstante Breite auf, die auch der Breite aller anderen Winkelmarken entspricht. Ein entsprechend verlängerte Referenzmarke zeigt die DE 19646391 im falle eine Linearen Weggebers.

Die Aufgabe der vorliegenden Erfindung ist daher eine Verbesserung des eingangs charakterisierten Systems bzw. von dessen Bestandteilen, welche bei wirtschaftlicher Herstellung die größtmögliche Verringerung der Baugröße und Masse, damit eine deutliche Verbesserung der Schwingbelastbarkeit und der maximal zulässigen Drehzahlen erlaubt. Dabei soll trotz höchster und gleichbleibend über die Umdrehung gewährleisteter Genauigkeit der Winkelauflösung ein vernachlässigbar geringer Zeitversatz bei der Bestimmung von Informationen aus zumindest zwei Winkel-Informationskanälen gegeben sein.

Gelöst wird diese Aufgabe zum Ersten durch eine Winkelmarkenscheibe, die erfindungsgemäß dadurch gekennzeichnet ist, daß die radiale Verlängerung der Referenzmarken eine gegenüber den Winkelmarken geringere Breite in Umfangsrichtung der Scheibe aufweist. Aufgrund der größeren Fläche der Referenzmarken gegenüber den Winkelmarken ist eine besonders einfache Auswertung mit Implementierung und Definition der Schwelle zum Erkennen der Abweichung der Referenzmarke von den Winkelmarken möglich. Mit der Verlängerung der Referenzmarken gegenüber den Winkelmarken in radialer Richtung bleibt überdies die für die Winkelauflösung bestimmende Strichbreite in Umfangsrichtung gleich und die Triggerung des Referenzsignals erfolg in genau dem gleichen Abstand wie jene einer herkömmlichen Winkelmarke. Zusätzlich wird nun durch geringere Breite der Verlängerung der Referenzmarke bei Beginn des Überstreichens durch das Empfangsfenster die gleiche Flankensteilheit wie bei allen anderen Winkelmarken auch erzielt, so dass der Signalverlauf aller Marken zum Zeitpunkt der signifikanten Triggerung den gleichen Verlauf aufweist. Erst nachdem bei den "gewöhnlichen" Winkelmarken die Anfangsflanke den neuen, stabilen Signalwert erreicht hat, soll im Fall einer besonders gekennzeichneten Referenzmarke der weitere Signalanstieg auf den abweichenden Extremwert einsetzen, was durch die beschriebene, gestufte Strichlängen-Variation erreicht wird.

Auch bleibt die Implementierung einer mehrwertigen Logik in der Konstruktion der Winkelmarken erhalten, welche bei entsprechender Anpassung der sensorischen Abtastung und der nachfolgenden Signalauswertung verfügbar bleibt und Information aus zwei oder mehreren Winkelinformations-Kanälen mit nur einer Abtast-Sensorik zugänglich macht. Auch die Forderung nach der für ein für den Anwender einsichtiges und in Echtzeit mögliches Meßprinzip kann damit erfüllt werden. Die Zusatzinformation (beispielsweise über die Referenzposition) ist im selben Kanal wie die Primärinformation (beispielsweise die fortlaufenden Winkelpositionen) enthalten, unabhängig von der Primärinformation und ohne dass darin eine Lücke erfordlich ist oder auftritt. Andererseits ist es für den Fall einer Winkelaufnehmer-Anordnung mit mehreren Meßkanälen möglich, nicht nur einen Kanal erfindungsgemäß mit einer mehrwertigen Logik auszustatten, sondern zwei oder mehrere Kanäle, so dass mit geringem Aufwand für jeden einzelnen Kanal (große Abstände zwischen den einzelnen Werten der mehrwertigen Logik und damit leichte Unterscheidung dieser Werte) dennoch eine große Anzahl von Informationen ermittelbar ist. Die unterschiedlichen Flächenabmessungen der Marken und die daraus resultierenden Werte des Abtast-Signals repräsentieren dabei die verschiedenen Werte der mehrwertigen Logik, wobei die Vielzahl gleicher Werte die fortlaufenden Winkelmarken kennzeichnen und der zumindest eine weitere, abweichende Wert als Referenzmarke dient. In der allgemeinen Anwendung des erfindungsgemäßen Prinzips ist keinerlei prinzipielle Beschränkung auf eine dreiwertige Logik begründet und es können durch eine vier- oder noch höherwertige Logik noch mehr Informationen in nur einem Kanal untergebracht werden. Diese Flächencodierung ist aber nicht nur bei optischen Meßverfahren anwendbar, wo sie zu einer Helligkeits-Codierung führt (beispielsweise: dunkel-helldoppelthell), sondern beispielsweise auch bei kapazitiven Verfahren. Prinzipiell lassen sich mehrwertige Winkelmarkenspuren aber für alle Arten von Abtastprinzipien realisieren, seien es kapazitive, induktive, optische, akustische oder sonstige Meßverfahren.

In ähnlicher Weise können die oben erläuterten Effekte erzielt werden, wenn gemäß einer anderen erfindungsgemäßen Ausführungsform jede Winkelmarke aus jeweils zumindest zwei radial angeordneten und voneinander beabstandeten Winkelmarken-Abschnitten im wesentlichen gleicher Breite in Umfangsrichtung der Scheibe besteht und die radiale Verlängerung der Referenzmarken in einem diese beiden Winkelmarken-Teile verbindenden Abschnitt besteht.

Falls beispielsweise aufgrund von mechanischen Störeinflüssen oder einer mangelhaften Justierung das Empfangsfenster des Sensors nicht exakt parallel zu den Winkelmarken bzw. exakt parallel ausgerichtet ist, kann der daraus resultierende Fehler minimal gehalten werden, wenn die Winkel- und/oder Referenzmarken in radialer Richtung symmetrisch ausgebildet sind. Bei symmetrischer Gestalt der Winkel- und/oder Referenzmarken in bezug auf den Drehsinn, symmetrisch also zur Strichdickenmitte, liefert die Markenscheibe in beiden Drehrichtungen ein gleiches, gegenüber Ausrichtungsfehlern des Empfangsfensters vergleichsweise unempfindliches Signal.

Gemäß einer Ausführungsform der Erfindung kann vorgesehen sein, daß die Winkel- und Referenzmarken durch strahlungsdurchlässige Bereiche der Markenscheibe gebildet sind. Dies ist besonders vorteilhaft für Durchlicht-Systeme, bei welchen die Marken durch Ausschnitte in einer ansonst lichtundurchlässigen Scheibe realisiert sein könnten.

Eine andere Ausführungsform der Erfindung sieht vor, daß die Winkel- und Referenzmarken durch reflektierende Flächen auf der Markenscheibe gebildet sind, welche als Variante für Messungen im Reflexionslicht gedacht ist.

Für diese letztere Art von Meßverfahren kann anstelle einer Flächen-Codierung auch vorgesehen sein, daß die Referenzmarken gegenüber den Winkelmarken eine Reflexions-Codierung, vorzugsweise einen gegenüber den Winkelmarken unterschiedlichen Reflexionskoeffizienten, aufweisen. Dabei sind die für die Formgebung der Flächen-Codierung relevanten Überlegungen sinngemäß auch für die Reflexions-Codierung anzuwenden. Eine Referenzmarke wird also durch eine Winkelmarke mit beispielsweise höherer Reflexion, beispielsweise durch eine Winkelmarke mit integrierter Zone mit höherer Reflexion gebildet. Damit können alle Fehler gänzlich vermieden werden, welche durch die Flächenabweichungen zwischen Winkel- und Referenzmarken entstehen oder entstehen können.

Die eingangs gestellte Aufgabe wird auch durch einen Winkelaufnehmer gelöst, der erfindungsgemäß dadurch gekennzeichnet ist, daß die radiale Verlängerung der Referenzmarken auf der Markenscheibe eine gegenüber den Winkelmarken geringere Breite in Umfangsrichtung der Scheibe aufweist, und daß lediglich jeweils ein auf die Spur von Winkelmarken gerichtetes Sende- bzw. Empfangsfenster vorgesehen ist. Dies bedeutet eine Implementierung einer mehrwertigen Logik in der Konstruktion der Winkelmarken, welche mit der entsprechenden Anpassung der sensorischen Abtastung und der nachfolgenden Signalauswertung gestattet, dass Information aus zwei oder mehreren Winkelinformations-Kanälen mit nur einer Abtast-Sensorik zugänglich macht. Damit kann die Anzahl der Abtast-Kanäle verringert und im besten Fall auf eine Abtast-Sensorik minimiert werden. Andererseits ist es für den Fall einer Winkelaufnehmer-Anordnung mit mehreren Meßkanälen möglich, nicht nur einen Kanal erfindungsgemäß mit einer mehrwertigen Logik auszustatten, sondern zwei oder mehrere Kanäle, so dass mit geringem Aufwand für jeden einzelnen Kanal (große Abstände zwischen den einzelnen Werten der mehrwertigen Logik und damit leichte Unterscheidung dieser Werte) dennoch eine große Anzahl von Informationen ermittelbar ist..

Um die Triggerung genau und für alle Marken gleichmäßig zu ermöglichen, ist vorgesehen, daß das Sende- und/oder Empfangsfenster eine gegenüber den Winkelmarken geringere Breite im Umfangsrichtung der Markenscheibe aufweist.

Gemäß einer ersten Ausführungsform befindet sich jedes Empfangsfenster auf der bezüglich des zugehörigen Senderfensters gegenüberliegenden Seite der Markenscheibe, um eine Abtast-Sensorik auf dem Durchlicht-Prinzip zu ermöglichen.

Gemäß einer anderen Ausführungsform der Erfindung und mit dem Vorteil einer weiteren Vereinfachung des Aufbaus der Winkelaufnehmer-Anordnung ist vorgesehen, daß sich jedes Empfangsfenster auf der selben Seite der Markenscheibe befindet wie das zugehörige Senderfenster. Dadurch können Leitungen zum Sender und Empfänger weitestgehend durch die gleichen Schutzhüllen verlegt werden und Aufspaltungen bzw. eine den Platzbedarf erhöhende Vergrößerung des Einbauraumes für Sender- und Empfangs können vermieden bzw. minimiert werden.

Der letztgenannte Vorteil wird in größtmöglichem Maß genutzt, wenn gemäß einem weiteren Merkmal der Erfindung das Sende- und Empfangsfenster zusammenfallen und dieses gemeinsame Fenster zumindest einen Austrittspunkt für die auf die Markenscheibe gerichtete Strahlung als auch zumindest einen Eintrittspunkt für die von der Markenscheibe reflektierte Strahlung aufweist. Diese Kombination von Sende- und Empfangsfenster kann beispielsweise durch eine Aufteilung der gesamten Sende- und Empfangsfläche auf viele kleine Punkte, vorzugsweise Ein- und Austrittspunkte in bzw. aus einzelnen Lichtleiterfasern, erreicht werden.

Für den oben beschriebenen Winkelaufnehmer ist zur Lösung der eingangs gestellten Aufgabe auch ein Verfahren geeignet, das erfindungsgemäß dadurch gekennzeichnet ist, daß für jede Winkel- und Referenzmarke aus einem analogen Extremwert oder Mittelwert der vorhergehenden Winkelmarken ein diesen Trend der Werte fortsetzender Extrem- oder Mittelwert bestimmt und um einen definierten Wert verändert als Schwelle für das Vorliegen des in seiner Modulierung abweichenden Referenzwertes in der Auswerteeinheit verwendet wird. Die Ermittlung der Winkelposition aufgrund der normalen Winkelmarken erfolgt vorteilhafterweise in Anlehnung an die erprobten Methoden wie eingangs erläutert, d.h. durch Erzeugung eines in Phase und Amplitude dem analogen Eingangssignai nachiaufenden Signais und Ermittlung der Überschneidungspunkte als Triggerpunkte für das digitalisierte Winkelsignal an den Signalflanken durch schnelle Komparatoren. Dieses Verfahren wird auch für die Referenzmarke in gleicher Weise angewendet. Um aber nun unabhängig von temporären Änderungen der Signalpegel oder Nullpunktänderungen der Sensorsignale od. dgl. die Referenzmarke sicher von den übrigen Winkelmarken zu unterscheiden, ist die erfindungsgemäße laufende analogelektronische Nachführung der Triggerspannung für die Referenzposition vorgesehen, bei der ein aktueller Mittelwert des Sensorsignals bestimmt und die Triggerschwelle durch Addition oder Subtraktion einer vorgegebenen fixen Spannung oder durch Multiplikation um einen vorgegebenen Faktor definiert wird. In gleicher Weise kann - selbstverständlich mit einer geringeren konstant addierten oder subtrahierten Spannung bzw. einem angepaßten Multiplikationsfaktor- auch von einem Extremwert des Sensorsignals ausgegangen werden.

Vorteilhafterweise und schaltungstechnisch sehr einfach kann das zuvor allgemein erläuterte Verfahren umgesetzt werden, wenn gemäß einem weiteren Merkmal der Erfindung für jede Winkel- und Referenzmarke aus einem analogen Helligkeits - Mittel- oder Extremwert der vorhergehenden Winkelmarke ein diesen Trend der Werte entsprechender Mittel- oder Extremwert bestimmt und um einen definierten Wert verändert als Schwelle für das Vorliegen des in seiner Helligkeit abweichenden Referenzwertes in der Auswerteeinheit verwendet wird.

Bei einer Ausführungsform des Verfahrens, bei welcher die Modulierung einer elektromagnetischen Strahlung des Senders durch die Winkel- und Referenzmarken in Form einer entsprechenden Veränderung der reflektierten oder durchgelassenen Strahlung erfolgt, ist erfindungsgemäß vorgesehen, daß analoge Intensitätswerte ermittelt und ausgewertet werden.

In der nachfolgenden Beschreibung soll die Erfindung unter Bezugnahme auf die beigefügten Zeichnungen eines bevorzugten Ausführungsbeispieles eines erfindungsgemäßen Kurbelwinkel-Aufnehmer-Systems näher erläutert werden, ohne jedoch dadurch in irgendeiner Weise eingeschränkt zu werden.

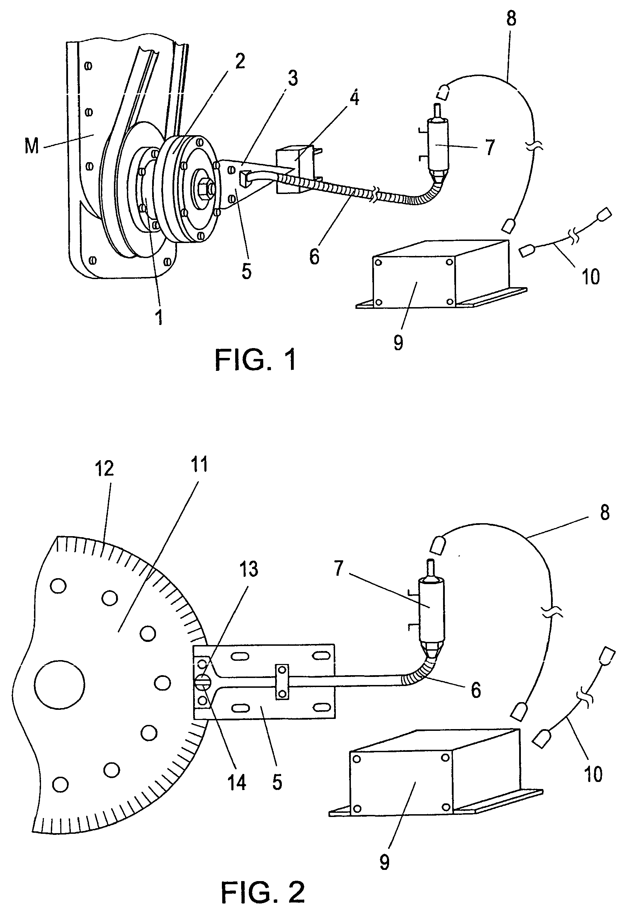

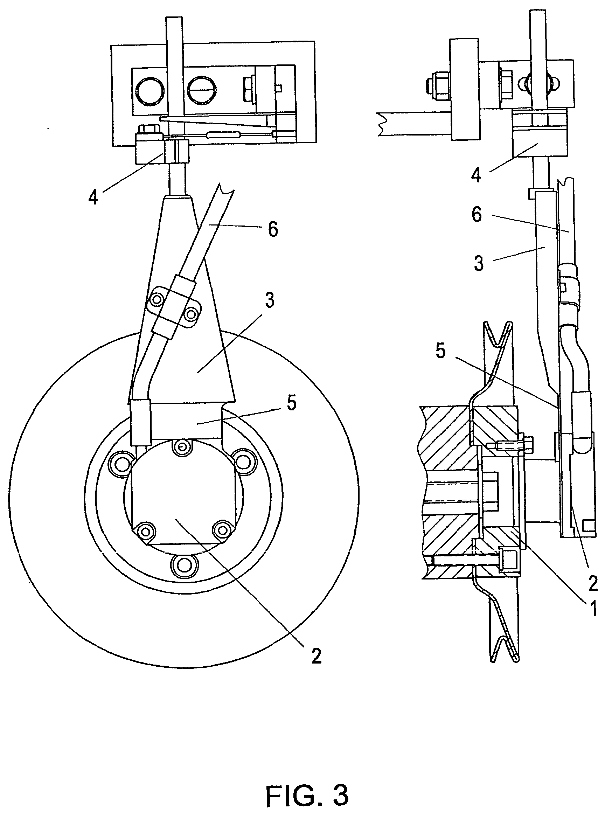

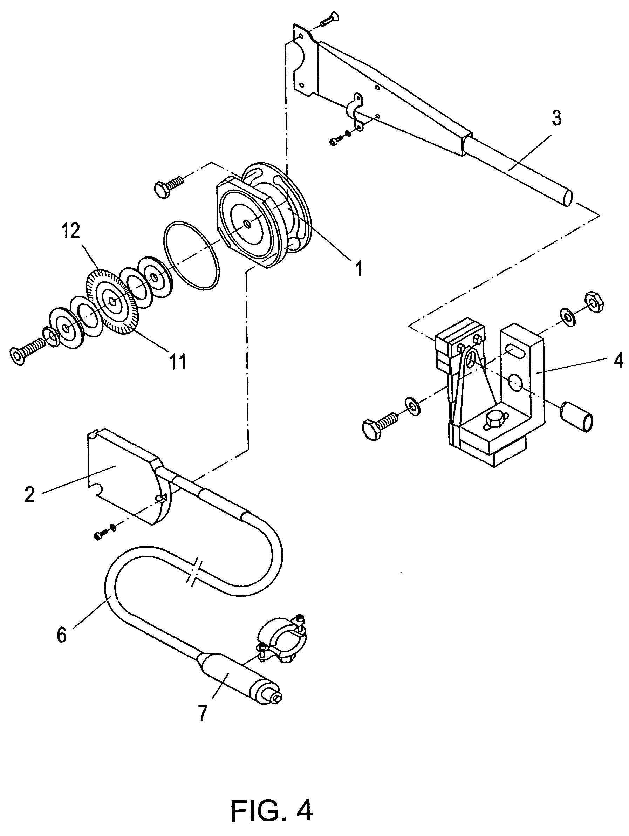

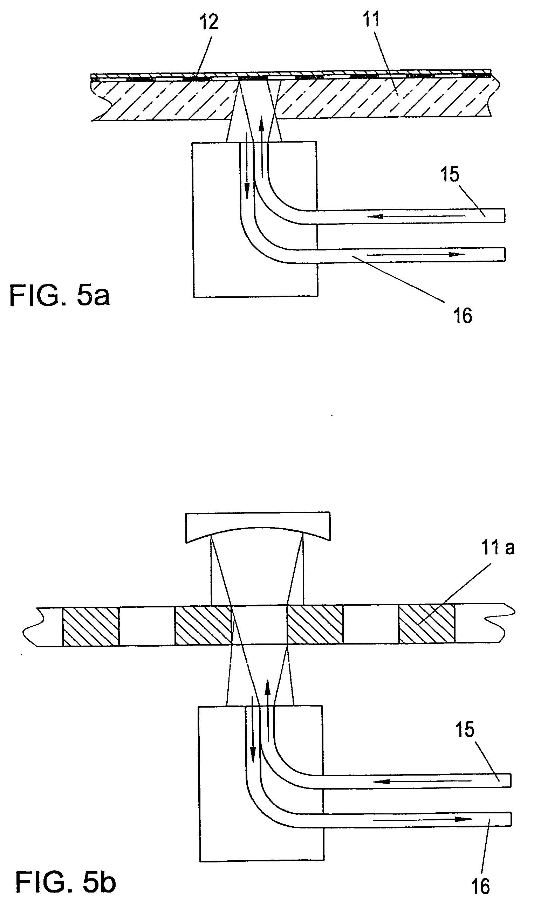

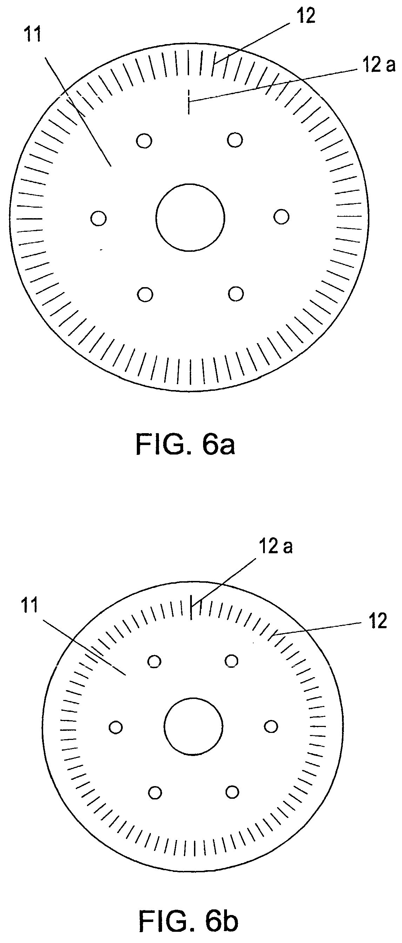

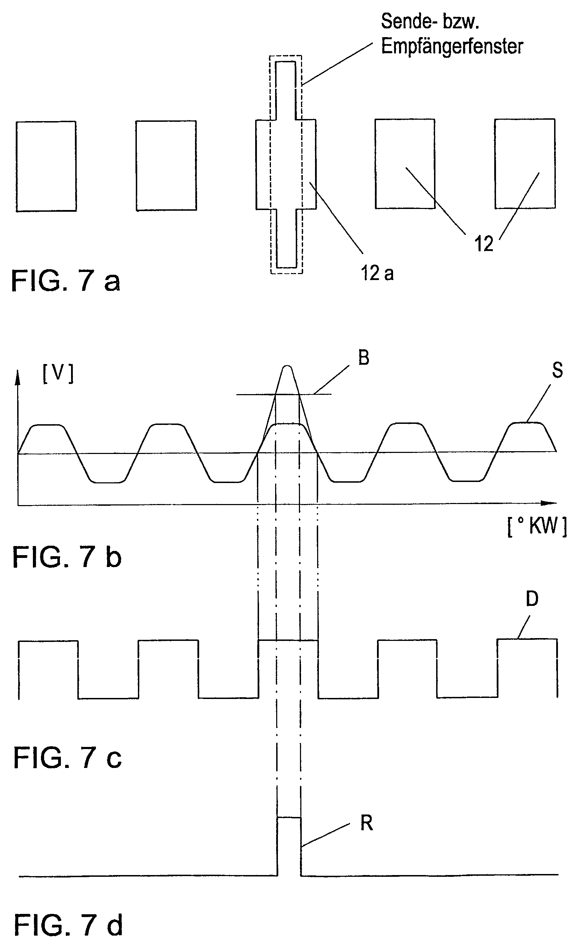

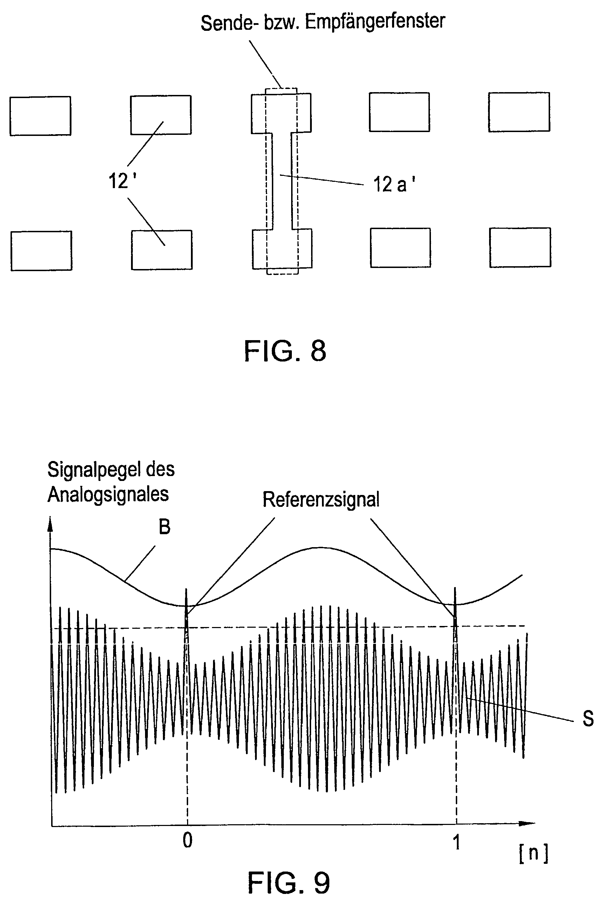

Die Fig. 1 zeigt eine teilweise schematische Ansicht eines an einem Motor angebrachten Winkelaufnehmer-Systems, Fig. 2 ist eine schematische Seitenansicht eines Systems bei dem Markenscheibe und Sensor voneinander getrennt angebracht sind, während Fig. 3 eine Draufsicht und ein teilweiser Schnitt durch das System der Fig. 1 ist. Fig. 4 ist eine Explosions-Darstellung des Systems der Fig. 1, die Fig. 5a und 5b erläutern schematisch die beiden wesentlichsten Meßprinzipien. Eine Markenscheibe gemäß dem Stand der Technik zeigt die Fig. 6a, eine erfindungsgemäße Markenscheibe dagegen die Fig. 6b. In Fig. 7a sind einige Winkelmarken zusammen mit einer Referenzmarke gemäß einer erfindungsgemäßen Ausführungsform dargestellt, in Fig. 7b das Analogsignal, weiches dem Lichtsignal entspricht, während 7c und 7d die Formen des aus dem Analogsignal abgeleiteten digitalisierten elektrischen Winkelsignals und des Triggersignals abbilden. Die Fig. 8 zeigt alternative Formen für Winkelmarken und zugehörige Referenzmarke, und schließlich ist in Fig. 9 das Prinzip der Ableitung der Referenzschwelle für die Referenzmarke in Abhängigkeit vom Signal der Winkelmarken schematisch dargestellt.

In der nachfolgenden Beschreibung wird als bevorzugtes Anwendungsbeispiel für einen erfindungsgemäßen Winkelaufnehmer ein Kurbelwinkelaufnehmer für Motoren näher erläutert, wie er als Basis für die Indiziertechnik herangezogen werden kann. Für die Indizierung von Brennkraftmaschinen wird der Druck in der Verbrennungskammer gemessen. Um eine kontinuierliche Druckkurve zu erhalten, müssen die Druckwerte präzise den jeweiligen Kurbelwellen-Positionen zugeordnet werden. Aufgrund der zyklischen Unregelmäßigkeiten ist die Winkelgeschwindigkeit der Kurbelwelle nicht gleichförmig. Jede zeitbasierte Datenaufnahme würde daher keine korrekte Zuordnung zum Kurbelwinkel liefern. Ein Kurbelwinkelaufnehmer gestattet eine korrekte Zuordnung zum aktuellen Kurbelwinkel, unabhängig von der Drehzahl. Weiters wird noch eine korrekte Kennzeichnung des oberen Totpunktes benötigt. Abhängig von den verschiedenen Aufgaben werden verschiedene Winkelauflösungen benötigt (typischerweise 1 bis 0.1 Grad). Da physikalische Grenzen das Anbringen von 3600 Markierungen (für 0.1 Grad Auflösung) auf dem begrenzten Umfang einer Scheibe verhindern ist normalerweise ein elektronischer Pulsmultiplier notwendig. Hohe Auflösungen von 0.1 bis 0.2 Grad sind beispielsweise für Untersuchungen in bezug auf den Einspritzzeitpunkt oder für detaillierte Untersuchungen des Klopfens. Für lediglich Verbrennungskammer-Druckmessungen oder IMEP Berechnungen wäre eine1 Grad Auflösung ausreichend. Normalerweise kommen zwei Positionen für die Anbringung eines Kurbelwinkelaufnehmers am Motor in Frage: Das freie Kurbelwellen-Ende oder der Antriebsstrang unmittelbar am Motor. Montagepositionen an der Nockenwelle oder anderen flexiblen Wellen sollte für Zwecke von Verbrennungsdruckmessungen vermieden werden, da aufgrund des Spiels (Torsion) bei derartigen indirekten Messungen große Fehler zwischen der Kurbelwelle und der gemessenen Position auftreten können. Die übliche Bestimmungsgenauigkeit beträgt +/- 0.1 Grad Kurbelwinkel.

Die Anbringung der Winkelmarkierungen am freien Wellenende und eines Druckaufnehmers am nächstliegenden Zylinder liefert die besten Ergebnisse und wird daher vorgezogen. An dieser Position ist das Minimum der Kurbelwellentorsion zu erwarten. In Fig. 1 ist daher auch eine Ansicht eines erfindungsgemäßen Kurbelwinkelaufnehmer-Systems gezeigt, das am freien Ende der Kurbelwelle befestigt ist. Die Aufnehmer-Einheit besteht aus einer Flanschverbindung 1, einem geschlossenen Gehäuse 2, in welchem eine Markenscheibe mit auf ihrer Oberfläche angebrachten 720 Kurbelwinkelmarken, darunter zumindest eine Referenzmarke, läuft und einem am Gehäuse 2 befestigten Trägerarm 3 mit Kiemmeinrichtung 4 zur Anbringung am Motorblock M. Der Trägerarm 3 und die Klemmeinrichtung 4 sind derart ausgeführt, dass der Trägerarm in Richtung normal zur Kurbelwellenachse Bewegungsfreiheit hat, jedoch axial und radial zur Kurbelwelle durch die Klemmvorrichtung am Motorblock M gestützt wird. Der Winkelaufnehmer enthält typischerweise eine doppelt in typischerweise Rillenkugellagern gelagerte Titan-Welleneinheit und das Gehäuse 2 besteht vorzugsweise aus einer hochfesten Aluminiumlegierung. Der Trägerarm 3 ist nahe am Gehäuse 2 vorzugsweise als dünne, flache Metallplatte 5, d.h. in Form einer Blattfeder, ausgeführt, so dass der Trägerarm 3 aus der Ebene der Metallplatte 5 heraus elastisch verformt werden kann, jedoch in der Ebene der Metallplatte 5 starr ist. Dadurch wird dem Gehäuse 2 eine in der Praxis auftretende Taumelbewegung am Kurbelwellenende ermöglicht.

Vom Gehäuse 2 weg führt ein typischerweise ca. 2m langes Faseroptik-Kabel 6, vorzugsweise aus zwei getrennten Glasfaserbündeln bestehend, vor Beschädigungen vorzugsweise durch einen Metallschlauch geschützt, zu einer Aufnehmerelektronik 7. Die Aufnehmerelektronik 7 umfaßt alle Komponenten zur Umwandlung des Lichtsignals in ein elektrisches Analogsignal (Licht/Spannungswandlung) und weiter in ein digitales Signal. Die Signalübertragung von der Aufnehmerelektronik 7 erfolgt vorteilhafterweise mittels der durch ihre hohe Störfestigkeit ausgezeichneten und große Kabellängen erlaubenden LVDS-Technologie (Low Voltage Differential Signalling). Die faseroptischen Leiter 6 sind vorzugweise von der Aufnehmerelektronik 7 trennbar und werden über Stecker-Verbindungen zu den Platinen geführt. Weiter führt dann von der Aufnehmerelektronik 7 ein Verbindungskabel 8 zu einem Impulswandler 9, wobei das Kabel vorzugsweise vom Plug-in-Typ, typischerweise ca. 5m lang ist, und kaskadiert werden kann. Der Impulswandler 9, der die empfangenen Signale synchronisiert und sie in TTL-Signale konvertiert, kann mit einem Pulsmultiplier zur Erhöhung der Auflösung ausgestattet sein. Er ist über ein weiteres Verbindungskabel 10 direkt mit einer Indizierausrüstung verbindbar. Allenfalls kann auch eine autarke Energieversorgungseinheit vorgesehen sein. Die elektrischen Komponenten sind nicht in direktem Motorkontakt und daher keinen mechanischen Einwirkungen (Vibrationen) ausgesetzt als auch bezüglich Temperaturbeanspruchung und elektrischer Einstreuung in vorteilhafterweise geschützt angebracht.

Fig. 2 stellt eine Situation dar, in welcher Markenscheibe 11 und Sensor 13 getrennt voneinander montiert sind. Die Markenscheibe 11 des Kurbelwinkelaufnehmer-Systems, beispielsweise über Klemmscheiben auf der Welle befestigt, ist mit den darauf aufgebrachten Winkelmarken 12 zu erkennen. Typischerweise sind diese Winkelmarken 12 als eine Vielzahl von vorzugsweise radial zur Rotationsachse ausgerichteten und vorzugsweise in Form eines konzentrisch zur Rotationsachse der Markenscheibe 11 angeordneten Kranzes Markierungen ausgeführt, wobei selbstverständlich auch zur Triggerung zumindest eine Referenzmarke vorgesehen sein muß. Gemäß der vorliegenden Erfindung ist die Markenscheibe 11 mit lediglich einer Spur von Winkelmarken 12 versehen und ist die oder jede Referenzmarke - wie weiter unten genauer erläutert wird - durch eine in ihren modulierenden Eigenschaften abweichende Winkelmarke gebildet. Gegenüber dieser Spur von Winkelmarken 12 liegt ein Aufnehmerkopf 13, der vorzugsweise auf der dünnen Metallplatte 5 befestigt ist. Der Aufnehmerkopf 13 ist typischerweise mit zumindest einem Fensterschlitz 14 ausgestattet, welche durch die Ausrichtung des Aufnehmerkopfes 13 selbst wieder in einer Weise ausgerichtet sind, dass sie parallel zu den Winkelmarken 12 sind. In jedem Fensterschlitz kann einer oder können auch zwei Lichtleiter enden, die zumindest je ein Sende- und Empfangsfenster bilden.

Die prinzipielle Funktion des Winkelaufnehmers basiert, wie in Fig. 5a und 5b schematisch erläutert, auf einer in der Aufnehmerelektronik 7 angeordnete Lichtquelle, vorzugsweise auf einer Infrarot-Quelle, die über einen Faser-Lichtleiter 15 eine konstante Lichtintensität auf die Markenscheibe 11 liefert. Das reflektierte Licht wird über einen anderen Faser-Lichtleiter 16 auf ein Fotoelement geleitet, das sich ebenfalls in der Aufnehmerelektronik 7 befindet. Bei der Ausführungsform der Fig. 5a sind die Winkelmarken 12 vom Reflexionstyp, während der Rest der Scheibe 11 lichtabsorbierend ausgeführt ist. Bei einer anderen möglichen Ausführungsform, dargestellt in Fig. 5b, wird beispielsweise eine geschlitzte Stahlscheibe 11 a verwendet. Diese geschlitzte Stahlscheibe 11 a wird zwischen Sensor und einem Reflektor eingesetzt. Das Licht wird bei den Schlitzen durchgelassen und durch den Rest der Scheibe 11a abgeschattet. Wenn sich die Markenscheibe 11 oder 11a dreht, wird durch das Fotoelement und die zugehörige Elektronik in der Aufnehmerelektronik 7 ein sinusähnliches Lichtsignal S erzeugt, wie in Fig. 7b dargestellt. Dieses analoge Lichtsignal S wird nachfolgend auf die in Fig. 7c erläuterte Weise in der Aufnehmerelektronik 7 in ein digitales elektrisches Signal D umgewandelt. Zu diesem Zweck wird die Amplitude des empfangenen Signals S mit einer Schaltschwelle S' geschnitten. Die Schnittpunkte der beiden Signale S und S' definiert die Übergangspunkte des Digitalsignals D, welches dann in Rechteckform vorliegt und zum Impulswandler 9 geleitet wird.

Der Impulswandler 9 liefert typischerweise 720 Kurbelwinkelpulse und einen Triggerpuls. Dabei wird für die Auswertung des Kurbelwinkel-Signales vorzugweise die negative (fallende) Flanke des Signals verwendet. Abhängig von der erforderlichen Auflösung und auch abhängig vom Typ des nachgeschalteten Indiziersystems kann ein Puls-Multiplier (digitaler PLL-Typ) im Impulswandlergehäuse 9 vorgesehen sein. Die Auflösung kann durch einen Schalter am Impulswandler 9 ausgewählt werden. Allenfalls kann der notwendige Multiplikations-Schaltkreis auch in der Schaltung des Impulswandlers 9 selbst integriert sein. Vorteilhafterweise kann die Aufnehmer-Einheit 1 bis 7 einfach vom Impulswandler 9 gelöst werden. In der Testzelle ist das wegen der Zeitersparnis Zweckmäßig, falls der Testmotor noch läuft und der nächste zu testende Motor bereits außerhalb der Zelle durch Montage einer weiteren Aufnehmer-Einheit vorbereitet wird.

Die eingesetzte Markenscheibe 11 für das Reflexionsverfahren gemäß beispielsweise der Fig. 5a besteht aus einem Polycarbon mit einer lichtabsorbierenden Schicht und reflektierenden Winkelmarken 12. Wie in Zusammenhang mit Fig. 6a und 6b erläutert wird, ist erfindungsgemäß die notwendige Referenzmarke 12a, die bei Markenscheiben gemäß dem Stand der Technik (Fig. 6a) in einer von den Winkelmarken 12 getrennten Spur vorgesehen ist, in die Spur der Winkelmarken 12 integriert. Die Referenzmarke 12a ist gemäß der vorliegenden Erfindung durch eine in ihren modulierenden Eigenschaften abweichende Winkelmarke 12 gebildet, wobei die Referenzmarke 12a eine gegenüber den Winkelmarken 12 unterschiedliche, größere Fläche aufweist. Dazu ist die Referenzmarke 12a, wie in Fig. 7a dargestellt ist, gegenüber den Winkelmarken 12 in radialer Richtung verlängert. Die radiale Verlängerung hat den Vorteil, dass die Auflösung in Umfangsrichtung, d.h. die Winkelauflösung an der Stelle der Referenzmarke 12a, nicht von jener der herkömmlichen Winkelmarken 12 abweicht. Eine andere Ausführung der Markenscheibe 11 sieht deren Anfertigung als lasergeschnittene Markenscheibe aus hochfestem Stahl vor. Der mögliche Außendurchmesser hängt in allen Fällen von der erforderlichen Maximaldrehzahl und den auftretenden Vibrationen ab.

Die radiale Verlängerung der Referenzmarken 12a weist eine gegenüber den übrigen Winkelmarken 12 und somit auch gegenüber dem zentralen Abschnitt der Referenzmarke 12a geringere Breite in Umfangsrichtung der Scheibe 11 auf, so dass sich, wie in Fig. 7b dargestellt, der Beginn und das Ende des Flankenverlaufs des analogen Lichtsignals S bei der Referenzmarke 12a nicht vom Verlauf bei jeder anderen Winkelmarke 12 unterscheidet. Es ist also für jede Marke 12 oder 12a auf der Markenscheibe im unteren Bereich des analogen Lichtsignals S die gleiche Flankensteilheit gegeben, was eine für alle Marken 12 und 12a identische Signalform des digitalisierten Signals D (siehe Fig. 7c) und damit eine konstante Winkelauflösung über den gesamten Umfang der Markenscheibe 11 gewährleistet. Erst nach dem untersten, für alle Winkelmarken 12 und 12a identischen Flankenverlauf steigt der Signalpegel des analogen Lichtsignals S für die Referenzmarke 12a wie in Fig. 7b dargestellt an und übersteigt schließlich eine Auswerteschwelle B, wobei durch die Schnittpunkte des Signals S mit der Auswerteschwelle B der Beginn und das Ende des digitalisierten Referenzsignals R (Fig. 7d) gegeben sind.
In Fig. 8 ist eine alternative Ausführungsform der Winkelmarken 12 und der Referenzmarke 12a als Beispiel dargestellt. Hier besteht jede Winkelmarke 12' aus jeweils zumindest zwei radial angeordneten und voneinander beabstandeten Winkelmarken-Abschnitten im wesentiichen gleicher Breite in Umfangsrichtung der Scheibe bestehet und die radiale Verlängerung der Referenzmarken in einem diese beiden Winkelmarken-Teile verbindenden Abschnitt besteht.

In Zusammenhang mit der Fig. 9 soll noch abschließend ein besonders vorteilhaftes Verfahren zur Ermittlung beispielsweise der Auswerteschwelle B für das Referenzsignal erläutert werden. Aus dem analogen Lichtsignal S, das durch die Vielzahl von Winkelmarken 12 und zumindest eine in der Qualität der Modulierung gegenüber den Winkelmarken 12 abweichende Referenzmarke 12a erhalten wird, soll diese Referenzmarke 12a mit Sicherheit ermittelt werden können, ohne dass diese Ermittlung durch Signaldrift, stellenweise Verschmutzung der Markenscheibe 11 od. dgl. beeinträchtig wird. Dazu wird in einer Recheneinheit des Systems für jede Winkelmarke 12 oder Referenzmarke 12a aus einem analogen Extremwert der vorhergehenden Winkelmarken 12 bzw. Referenzmarke 12a ein diesen Trend der Extremwerte fortsetzender Extremwert bestimmt und um einen definierten Wert verändert als Schwelle B für das Vorliegen des in seiner Modulierung abweichenden Referenzwertes verwendet. Die Auswerteschwelle B folgt somit dem Trend der Extremwerte der Amplituden des analogen Signals S, wobei vorzugsweise der Abstand zwischen der Auswerteschwelle B und der Hüllkurve der Extremwerte des Signals S proportional, vorzugsweise direkt proportional, zur Größe des Extremwertes veränderlich ist. Dieses Verfahren wird vorteilhafterweise wegen der höheren Verarbeitungsgeschwindigkeit für die analogen Extremwerte der Intensität des Signals S ermittelt und mit diesem Signal ausgewertet.

## Patentansprüche

1. Markenscheibe für einen Drehwinkelaufnehmer für rotierende Bauteile, insbesonders rotierende Wellen, mit einer Vielzahl von vorzugsweise radial zur Rotationsachse ausgerichteten und vorzugsweise in Form eines konzentrisch zur Rotationsachse angeordneten Kranzes vorgesehenen Winkelmarken (12) in lediglich einer Spur und mit zumindest einer Referenzmarke (12a), welche durch eine in ihren modulierenden Eigenschaften abweichende Winkelmarke gebildet ist, wobei die zumindest eine Referenzmarke eine gegenüber den Winkelmarken (12) größere Fläche aufweist, wozu die zumindest eine Referenzmarke (12a) gegenüber den Winkelmarken (12a) in radialer Richtung verlängert ist **dadurch gekennzeichnet, daß** die radiale Verlängerung der Referenzmarke (12a) eine gegenüber den Winkelmarken (12) geringere Breite in Umfangsrichtung der Scheibe (11) aufweist.

2. Markenscheibe nach Anspruch 1, **dadurch gekennzeichnet, daß** die Spur von Winkelmarken (12') aus jeweils zumindest zwei radial zueinander angeordneten und voneinander beabstandeten Winkelmarken-Abschnitten von im wesentlichen gleicher Breite in Umfangsrichtung der Scheibe (11) besteht, und daß die radiale Verlängerung der Referenzmarken (12'a) in einem diese beiden Winkelmarken-Teile verbindenden, schmäleren Abschnitt besteht.

3. Markenscheibe nach einem der Ansprüche 1 oder 2, **dadurch gekennzeichnet, daß** die Winkel- und/oder Referenzmarken (12, 12a, 12', 12'a) in radialer Richtung symmetrisch ausgebildet sind.

4. Markenscheibe nach einem der Ansprüche 1 bis 3, **dadurch gekennzeichnet, daß** die Winkel- und Referenzmarken (12, 12a, 12', 12'a) durch strahlungsdurchlässige Bereiche der Markenscheibe (11) gebildet sind.

5. Markenscheibe nach einem der vorhergehenden Ansprüche, **dadurch gekennzeichnet, daß** die Winkel- und Referenzmarken (12, 12a, 12', 12'a) durch reflektierende Flächen auf der Markenscheibe (11) gebildet sind.

6. Winkelaufnehmer für rotierende Bauteile, insbesonders rotierende Wellen, umfassend eine mit dem rotierenden Bauteil koppelbare Markenscheibe mit einer Vielzahl von vorzugsweise radial zur Rotationsachse ausgerichteten und vorzugsweise in Form eines konzentrisch zur Rotationsachse angeordneten Kranzes vorgesehenen Winkelmarken (12) in lediglich einer Spur und mit zumindest einer Referenzmarke (12a), welche durch eine in ihren modulierenden Eigenschaften abweichende Winkelmarke gebildet ist, wobei die zumindest eine Referenzmarke eine gegenüber den Winkelmarken (12) größere Fläche aufweist, wozu die zumindest eine Referenzmarke (12a) gegenüber den Winkelmarken (12a) in radialer Richtung verlängert ist, mit weiters einer feststehenden Abtasteinheit für die Winkelmarken, umfassend zumindest einen Sender elektromagnetischer Strahlung und zumindest einen Empfänger für die von der Markenscheibe modulierte Strahlung, sowie Verbindungsmitteln zu einer Auswerteinheit, **dadurch gekennzeichnet, daß** die radiale Verlängerung der zumindest einen Referenzmarke (12a) auf der Markenscheibe (11) eine gegenüber den Winkelmarken (12) geringere Breite in Umfangsrichtung der Scheibe (11) aufweist, und daß lediglich jeweils ein auf die Spur von Winkelmarken (12) gerichtetes Sende- bzw. Empfangsfenster (14) vorgesehen ist.

7. Winkelaufnehmer nach Anspruch 7, **dadurch gekennzeichnet, daß** das Sende- und/oder Empfangsfenster (14) eine gegenüber den Winkelmarken (12) geringere Breite in Umfangsrichtung der Markenscheibe (11) aufweist.

8. Winkelaufnehmer nach Anspruch 7 oder 8, **dadurch gekennzeichnet, daß** sich jedes Empfangsfenster auf der bezüglich des zugehörigen Senderfensters gegenüberliegenden Seite der Markenscheibe (11) befindet.

9. Winkelaufnehmer nach Anspruch 7 oder 8, **dadurch gekennzeichnet, daß** sich jedes Empfangsfenster auf der selben Seite der Markenscheibe (11) befindet wie das zugehörige Senderfenster.

10. Winkelaufnehmer nach Anspruch 10, **dadurch gekennzeichnet, daß** das Sende- und Empfangsfenster (14) zusammenfallen und dieses gemeinsame Fenster zumindest einen Austrittspunkt für die auf die Markenscheibe (11) gerichtete Strahlung als auch zumindest einen Eintrittspunkt für die von der Markenscheibe (11) reflektierte Strahlung aufweist.

11. Verfahren zur Ermittlung eines Referenzwertes aus einem analogen Signal, welches durch Modulierung eines Sendersignales durch eine Vielzahl von Winkelmarken und zumindest eine in der Qualität der Modulierung gegenüber den Winkelmarken abweichende Referenzmarke erhalten wird, wobei das modulierte Signal durch einen Empfänger aufgenommen und einer Auswerteinheit zugeführt und allenfalls weiter digitalisiert wird, **dadurch gekennzeichnet, daß** für jede Winkel- und Referenzmarke aus einem analogen Extremwert der vorhergehenden Winkelmarken ein diesen Trend der Extremwerte fortsetzender Extremwert bestimmt und um einen definierten Wert verändert als Schwelle für das Vorliegen des in seiner Modulierung abweichenden Referenzwertes in der Auswerteeinheit verwendet wird.

12. Verfahren nach Anspruch 12, **dadurch gekennzeichnet, daß** für jede Winkel- und Referenzmarke aus einem analogen Helligkeits - Extremwert der vorhergehenden Winkelmarken ein diesen Trend der Extremwerte entsprechender Extremwert bestimmt und um einen definierten Wert verändert als Schwelle für das Vorliegen des in seiner Helligkeit abweichenden Referenzwertes in der Auswerteeinheit verwendet wird.

13. Verfahren nach einem der Ansprüche 12 oder 13, wobei die Modulierung einer elektromagnetischen Strahlung des Senders durch die Winkel- und Referenzmarken in Form einer entsprechenden Veränderung der reflektierten oder durchgelassenen Strahlung erfolgt, **dadurch gekennzeichnet, daß** analoge Extremwerte der Intensität ermittelt und ausgewertet werden.

## Claims

1. A marked plate for a rotational angle sensor for rotating structural parts, especially rotating shafts, with many angle marks (12) preferably oriented radially to the rotational axis and preferably arranged in the form of a circle concentrically to the rotational axis, wherein only one track of angle marks (12) is provided, and with at least one reference mark (12a) that is formed by an angle mark (12) that deviates in its modulating properties, wherein the at least one reference mark (12a) has a larger area than the angle marks (12) and, to this end, the at least one reference mark (12a) is extended relative to the angle marks (12) in the radial direction, **characterized in that** the radial extension of the reference mark (12a) has a smaller width in the circumferential direction of the plate relative to the angle marks (12).

2. A marked plate according to claim 1, **characterized in that** the track of angle marks (12') comprises in each case at least two angle mark-sections radially arranged with respect to each other and spaced at a distance from each other, and having essentially equal widths in the circumferential direction of the plate (11), and the radial extension of the reference marks (12'a) comprises a narrower section that connects these two angle mark parts.

3. A marked plate according to claim 1 or 2, **characterized in that** the angle and reference marks (12, 12a, 12', 12'a) are arranged symmetrically in the radial direction.

4. A marked plate according to one of claims 1 to 3, **characterized in that** the angle and reference marks (12, 12a, 12', 12'a) are formed by means of radiation-permeable areas of the marked plate (11).

5. A marked plate according to any of the preceding claims, **characterized in that** the angle and reference marks (12, 12a, 12', 12'a) are formed by means of reflecting surfaces on the marked plate (11).

6. An angle sensor for rotating structural parts, especially rotating shafts, including a marked plate that can be coupled to the rotating structural part and that has many angle marks (12) preferably oriented radially to the rotational axis and preferably arranged in the form of a circle concentrically to the rotational axis, wherein only one track of angle marks (12) is provided, and with at least one reference mark (12a) that is formed by an angle mark (12) that deviates in its modulating properties, wherein the at least one reference mark (12a) has a larger area than the angle marks (12) and, to this end, the at least one reference mark (12a) is extended relative to the angle marks (12) in the radial direction, further with a fixed sensor unit for the angle marks, including at least one transmitter of electromagnetic radiation and at least one receiver for the radiation modulated by the marked plate, as well as connection means to an evaluation unit, **characterized in that** the radial extension of the at least one reference mark (12a) on the marked plate (11) has a smaller width in the circumferential direction of the plate (11) relative to the angle marks (12), and that only one transmitting and/or receiving window (14) at a time is provided directed at the track of angle marks (12).

7. An angle sensor according to claim 6, wherein the transmitting and/or receiving window (14) has a smaller width relative to the angle marks (12) in the circumferential direction of the marked plate (11).

8. An angle sensor according to claim 6 or 7, wherein each receiving window is located on the side of the marked plate (11) that lies opposite an associated transmitting window.

9. An angle sensor according to claim 6 or 7, wherein each receiving window is located on the same side of the marked plate (11) as an associated transmitting window.

10. An angle sensor according to claim 9, wherein the transmitting and receiving window (14) coincide and this common window has at least one outlet point for the radiation directed at the marked plate (11) as well as at least one intake point for the radiation reflected by the marked plate (11).

11. A method for determining a reference value from an analog signal, which is obtained by the modulation of a transmitter signal through many angle marks and at least one reference mark that deviates in the quality of the modulation relative to the angle marks, whereby the modulated signal is received by a receiver and supplied to an evaluation unit and digitalized further if need be, **characterized in that** for each angle and reference mark, from an analog peak value of the preceding angle marks, an peak value continuing the trend of peak values is determined and is used in the evaluation unit, changed by a defined value, as a threshold for the presence of the reference value that deviates in its modulation.

12. A method according to claim 11, **characterized in that** for each angle and reference mark, from an analog brightness peak value of the previous angle marks, a peak value corresponding to the trend of peak values is determined and is used, changed by a defined value, as a threshold for the presence of the reference value that deviates in its brightness in the evaluation unit.

13. A method according to claim 11 or 12, wherein the modulation of an electromagnetic radiation of the transmitter is done by the angle and reference marks in the form of a corresponding change of the reflected or transmitted radiation, **characterized in that** analog peak values of the intensity are determined and evaluated.

## Revendications

1. Disque codeur pour un capteur de position angulaire pour composants tournants, en particulier pour arbres tournants, avec une pluralité de repères angulaires (12) orientés de préférence radialement par rapport à l'axe de rotation et prévus de préférence sous la forme d'une couronne disposée de manière concentrique par rapport à l'axe de rotation, sur une seule piste, et avec au moins un repère de référence (12a) formé par un repère angulaire qui se distingue par ses propriétés de modulation, dans lequel ledit au moins un repère de référence présente une surface plus grande par rapport aux repères angulaires (12a), ledit au moins un repère de référence (12a) se prolongeant à cet effet dans la direction radiale par rapport aux repères angulaires (12a), **caractérisé en ce que** le prolongement radial du repère de référence (12a) présente par rapport aux repères angulaires (12) une largeur inférieure dans la direction circonférentielle du disque (11).

2. Disque codeur selon la revendication 1, **caractérisé en ce que** la piste se compose de repères angulaires (12') composés respectivement d'au moins deux secteurs de repères angulaires, respectivement disposés radialement l'un par rapport à l'autre et étant espacés l'un de l'autre, de largeur substantiellement identique dans la direction circonférentielle du disque (11), et **en ce que** le prolongement radial des repères de référence (12'a) se compose d'un secteur plus étroit reliant lesdites deux parties de repères angulaires.

3. Disque codeur selon l'une quelconque des revendications 1 ou 2, **caractérisé en ce que** les repères angulaires et/ou de référence (12, 12a, 12', 12'a) sont réalisés de manière symétrique dans la direction radiale.

4. Disque codeur selon l'une quelconque des revendications 1 à 3, **caractérisé en ce que** les repères angulaires et de référence (12, 12a, 12', 12'a) sont formés par des zones du disque codeur (11) qui sont perméables au rayonnement.

5. Disque codeur selon l'une quelconque des revendications précédentes, **caractérisé en ce que** les repères angulaires et de référence (12, 12a, 12', 12'a) sont formés par des surfaces réfléchissantes sur le disque codeur (11).

6. Capteur de position angulaire pour composants tournants, en particulier pour arbres tournants, comprenant un disque codeur pouvant être couplé au composant tournant, avec une pluralité de repères angulaires (12) orientés de préférence radialement par rapport à l'axe de rotation et prévus de préférence sous la forme d'une couronne disposée de manière concentrique par rapport à l'axe de rotation, sur une seule piste, et avec au moins un repère de référence (12a) formé par un repère angulaire qui se distingue par ses propriétés de modulation, dans lequel ledit au moins un repère de référence présente une surface plus grande par rapport aux repères angulaires (12), ledit au moins un repère de référence (12a) se prolongeant à cet effet dans la direction radiale par rapport aux repères angulaires (12a), avec en outre une unité de balayage stationnaire pour les repères angulaires, comprenant au moins un émetteur de rayonnement électromagnétique et au moins un récepteur pour le rayonnement modulé par le disque codeur, ainsi que des moyens de connexion à une unité d'analyse, **caractérisé en ce que** le prolongement radial dudit au moins un repère de référence (12a) sur le disque codeur (11) présente par rapport aux repères angulaires (12) une largeur inférieure dans la direction circonférentielle du disque (11), et **en ce qu'**il est prévu respectivement une seule fenêtre d'émission ou de réception (14) dirigée vers la piste de repères angulaires (12).

7. Capteur de position angulaire selon la revendication 6, **caractérisé en ce que** la fenêtre d'émission et/ou de réception (14) présente par rapport aux repères angulaires (12) une largeur inférieure dans la direction circonférentielle du disque codeur (11).

8. Capteur de position angulaire selon la revendication 6 ou 7, **caractérisé en ce que** chaque fenêtre de réception se trouve du côté du disque codeur (11) opposé par rapport à la fenêtre d'émission associée.

9. Capteur de position angulaire selon la revendication 6 ou 7, **caractérisé en ce que** chaque fenêtre de réception se trouve du même côté du disque codeur (11) que la fenêtre d'émission associée.

10. Capteur de position angulaire selon la revendication 9, **caractérisé en ce que** la fenêtre d'émission et la fenêtre de réception (14) coïncident et que ladite fenêtre commune présente au moins un point de sortie pour le rayonnement dirigé sur le disque codeur (11) ainsi qu'au moins un point d'entrée pour le rayonnement réfléchi par le disque codeur (11).

11. Procédé de détection d'une valeur de référence à partir d'un signal analogique obtenu par modulation d'un signal d'émission à travers une pluralité de repères angulaires et au moins un repère de référence différent des repères angulaire en qualité de modulation, dans lequel le signal modulé est capté par un récepteur et amené à une unité d'analyse et éventuellement encore numérisé, **caractérisé en ce que** pour chaque repère angulaire et de référence, à partir d'une valeur extrême analogique des repères angulaires précédents, une valeur extrême poursuivant cette tendance des valeurs extrêmes est déterminée et, modifiée d'une valeur définie, est utilisée dans l'unité d'analyse comme un seuil pour la présence de la valeur de référence différente en modulation.

12. Procédé selon la revendication 11, **caractérisé en ce que** pour chaque repère angulaire et de référence, une valeur extrême correspondant à cette tendance des valeurs extrêmes est déterminée à partir d'une valeur extrême de luminosité analogique des repères angulaires précédents, et modifiée d'une valeur définie, est utilisée comme un seuil dans l'unité d'analyse pour la présente de la valeur de référence différente en luminosité.

13. Procédé selon l'une quelconque des revendications 11 ou 12, dans lequel la modulation d'un rayonnement électromagnétique de l'émetteur à travers les repères angulaires et de référence est effectuée sous la forme d'une modification adéquate du rayonnement réfléchi ou transmis, **caractérisé en ce que** des valeurs extrêmes analogiques de l'intensité sont déterminées et analysées.
